Europäisches Patentamt

European Patent Office

Office européen des brevets

(19)

(11) Numéro de publication: **0 151 151**

**B2**

(12) **NOUVEAU FASCICULE DE BREVET EUROPEEN**

(45) Date de publication du nouveau fascicule du brevet: **25.04.90**

(51) Int. Cl.⁵: **B 29 C 67/22,** F 24 H 1/18

(21) Numéro de dépôt: **84902713.1**

(22) Date de dépôt: **11.07.84**

(86) Numéro de dépôt international:
**PCT/FR84/00171**

(87) Numéro de publication internationale:
**WO 85/00552 14.02.85 Gazette 85/04**

(54) **PROCEDE D'OBTENTION D'UN CORPS DE CHAUFFE-EAU A PARTIR D'UN MATERIAU PLASTIQUE A BASE DE POLYESTER RENFORCE DE FIBRES.**

(30) Priorité: **12.07.83 FR 8311789**

(43) Date de publication de la demande:
**14.08.85 Bulletin 85/33**

(45) Mention de la délivrance du brevet:
**25.04.90 Bulletin 90/17**

(45) Mention de la decision concernant l'opposition:
**30.12.86 Bulletin 86/52**

(84) Etats contractants désignés:
**AT BE CH DE FR GB LI LU NL SE**

(56) Documents cités:
**DE-A-1 504 220**    **IT-A- 615 487**
**DE-A-1 586 759**    **US-A-3 306 960**
**DE-A-1 704 448**    **US-A-3 937 781**
**DE-A-1 951 326**    **US-A-4 191 304**
**FR-A-2 000 877**

(73) Titulaire: **EYNARD, Paul Joseph**
**19, rue de Sully**
**F-26000 Valence (FR)**
(73) Titulaire: **NUSBAUMER, Charles**
**Route de Touland**
**F-07130 Soyons (FR)**

(72) Inventeur: **EYNARD, Paul Joseph**
**19, rue de Sully**
**F-26000 Valence (FR)**
Inventeur: **NUSBAUMER, Charles**
**Route de Touland**
**F-07130 Soyons (FR)**

(74) Mandataire: **Phélip, Bruno et al**
**c/o Cabinet Harlé & Phélip 21, rue de La Rochefoucauld**
**F-75009 Paris (FR)**

EP 0 151 151 B2

Courier Press, Leamington Spa, England.

**Description**

La présente invention concerne un procédé d'obtention d'un corps de chauffe-eau à partir d'un matériau plastique à base de polyester renforcé de fibres. Les problèmes posés par la construction des corps de chauffe-eau sont multiples. Il faut en effet fabriquer un appareil dont la surface intérieure répond aux exigences du contact avec des matières alimentaires (eau), qui est étanche et qui résiste à la fois à des températures élevées (pouvant atteindre 120°C) et à la pression. Jusqu'à présent, on avait surtout utilisé des corps métalliques, revêtus intérieurement, mais à la connaissance des demandeurs, il n'existe pas de chauffe-eau entièrement en matière plastique, essentiellement à base de polyester, ne comportant pas de paroi métallique extérieure ou intérieure.

On a déjà décrit dans l'art antérieur, l'obtention de produits industriels ayant une structure stratifiée renforcée par des fibres de verre. Ainsi DE—A 1 951 326 décrit l'obention d'un réservoir en utilisant un procédé selon lequel on introduit une mousse de polyuréthane qui durcit entre un moule métallique extérieur et une vessie gonflable. On enduit le moule métallique d'une couche d'adhésif en polyester qui est revêtu de fibres de verre. On maintient du côté interne la vessie par un ensemble d'anneaux et de tirants. Du côté interne, la vessie gonflable est également garnie d'une couche d'adhésif en polyester sur laquelle on dispose une couche de fibres de verre. Après ouverture du moule métallique extérieur et retrait de la vessie gonflable, on obtient un stratifié polyester fibres de verre avec une âme constituée de mousse de polyuréthane.

On ne connaît pas jusqu'à présent des corps de chauffe-eau dépourvus de pièces métalliques dont l'âme est constituée entièrement d'une résine polyester renforcée par des fibres de verre et comportant une coque interne en un matériau de qualité alimentaire.

Les enceintes réalisées en matériau plastique, renforcé fibres de verre, sont généralement obtenues en disposant sur une forme servant de modèle, une succession de couches de fibres de verre liées entre elles par une résine synthétique. Il est également connu des les fabriquer par roulage et collage de plaque de matériau plastique. Ces divers procédés sont d'une mise en œuvre complexe, ne se prêtent pas à la fabricaiton en série et ne permettent pas de garantir la régularité des caractéristiques mécaniques des enceintes obtenues.

La présente invention propose un corps de chauffe-eau selon la définition ci-dessus, qui peut être obtenu d'une façon simple et avec un prix de revient extrêmement bas par rapport aux corps de chauffe-eau selon la technique antérieure.

Le procédé suivant l'invention permet de réaliser de façon reproductible, une enceinte en matériau plastique, monobloc, imputrescible, résistante à la corrosion et à la pression. En outre, à partir de ce procédé, on peut obtenir des formes ovoïdes ou sphériques qui permettent une capacité maximum pour un minimum de surface et sont donc plus résistantes à la pression et plus économiques. L'invention concerne un procédé d'obtention d'un corps de chauffe-eau en matière plastique résistante à la pression ne comportant pas de paroi métallique ni à l'extérieur, ni à l'intérieur, dans lequel

1. on utilise une coque en matière plastique, de préférence en polypropyléne, destinée à constituer l'intérieur du chauffe-eau et servant également de paroi intérieure de moulage, ladite coque comportant au moins un orifice,

2. on met en place ladite coque à l'intérieur d'un moule en deux parties en ménageant un espace entre la partie extérieure de la coque et l'intérieur du moule, la coque et l'une des parties au moins du moule possédant des moyens coopérants de centrage et de maintien de la coque à l'intérieur du moule, le moule présentant une ouverture,

3) on introduit de l'eau dans la coque intérieure par ledit orifice,

4) on coule par ladite ouverture de moule un mélange liquide consistant essentiellement en une composition de résine polyester renforcée de fibres capable de mousser et de polymériser, en refroidissant l'extérieur du moule à une température d'environ 10 à 15°C au moment de la coulée de la résine, afin d'obtenir un effet de peau à la surface de contact de la mousse avec le moule lors de la polymérisation de celle-ci, en contrôlant la température de la résine en cours d'expansion et de polymérisation de manière qu'elle ne dépasse pas 40°C environ, après quoi on retire les deux parties du moule.

Selon l'invention, le renforcement de la résine de polyester à l'aide de fibres de verre peut être réalisé de diverses manières. Selon un premier mode de réalisation, la coque intérieure est revêtue, lors de sa mise en place dans le moule, et sur la surface extérieure de ladite coque, de fibres de verre, de préférence préformées pour faciliter leur mise en place. Il est également possible de tapisser de fibres de verre l'une et/ou l'autre des deux parties du moule, sur la surface intérieure de celui-ci.

En variante, on utilise des fibres de verre coupées qui sont introduites dans le mélange à base de résine et coulées avec celui-ci à l'intérieur du moule.

Le procédé de l'invention présente des caractéristiques critiques. La coque intérieure remplit une quadruple fonction. En premier lieu, elle sert de moule intérieur lors de la mise en œuvre du procédé. En second lieu lorsqu'elle est remplie d'eau, elle permet de résister à la pression résultant de l'expansion du mélange de résine de polyester capable de mousser. En troisième lieu, la coque assure la forme géométrique correspondant au contenu interne du chauffe-eau à fabriquer. Enfin, on utilise la coque comme moyen de contrôler la température lors du moulage, grâce à la circulation d'eau à l'intérieur de la coque, ainsi qu'il sera décrit ci-après.

Le matériau constitutif de la coque doit présenter une qualité alimentaire étant donné qu'il est destiné à contenir de l'eau. Il doit également tenir à des températures de fonctionnement quasi permanentes de 80°C environ, et dans certains cas exceptionnels les températures peuvent atteindre 120°C. Selon l'invention, le polypropylène s'est avéré la matière la mieux appropriée pour répondre à ces exigences.

La coque interne en matière plastique peut être réalisée de plusieurs manières. Pour des volumes utiles supérieurs à 300 litres environ, on peut fabriquer deux demi-coques par thermoformage et les assembler par soudage ou collage. On peut aussi, notamment pour des volumes moins importants, par exemple inférieurs à 300 litres, réaliser la coque d'un seul tenant par thermosoufflage.

La coque doit comporter au moins un orifice qui aura plusieurs fonctions. Sa première fonction sera de permettre l'introduction de l'eau qui servira de fluide de contrôle de la température lors de la polymérisation et du moussage de la résine polyester. En second lieu, l'orifice permet de recevoir l'appareillage électrique qui servira à équiper le chauffe-eau. Une troisième fonction possible de l'orifice est de contribuer au centrage et à la bonne mise en place de la coque à l'intérieur du moule. Pour les raisons qui précèdent, on préfère que l'orifice en question soit centré sur l'axe de symétrie de la coque.

La coque présente également des moyens destinés à coopérer avec des moyens correspondants du moule en vue du centrage et du maintien de la coque à l'intérieur du moule. Il est commode de prévoir à cet effet une protubérance sur la coque, de préférence située en vis-à-vis de l'orifice précité et sur l'axe de symétrie de la coque, à l'autre extrémité de celle-ci. Une telle protubérance, conjointement à l'orifice précité, servira à maintenir en position la coque dans le moule lors de l'expansion de la mousse, de sorte que l'assemblage coque-moule résiste efficacement à la pousée interne exercée par la mousse en expansion.

Des moyens mécaniques complémentaires, à la portée de l'homme du métier sont prévus pour la fixation de la coque sur le moule. Ces moyens peuvent consister en des goujons et des écrous.

Selon la présente invention, il est également critique de contrôler soigneusement les conditions de la polymérisation de la résine polyester. Le mélange liquide de coulée se trouve au départ à une température égale ou supérieure à 20°C, c'est-à-dire à une température voisine de l'ordinaire. Un premier contrôle se fait par l'extérieur: au moment de la coulée de la résine, on refroidit l'extérieur du moule à une température de l'ordre de 10 à 15°C, ce qui a pour effet de créer des conditions différentielles de température au contact du moule et de la mousse en cours d'expansion et de polymérisation. Ce moyen permet de réaliser un effet de peau à la surface externe de la mousse qui est en contact avec l'intérieur du moule. Cette peau exerce un effet de renforcement.

Le contrôle de la température se fait également de l'intérieur, grâce au fait que la coque a été remplie, préalablement à la coulée de la résine, d'eau ou d'un autre fluide caloporteur. Pour de nombreux besoins pratiques, il suffit de remplir d'eau la coque, sans qu'il soit nécessaire d'assurer une circulation d'eau complémentaire au cours de la réaction de polymérisation et d'expansion. Toutefois, dans certains cas et selon le choix des composants de la composition de la résine de polyester, il est également possible d'assurer une circulation d'eau à l'intérieur de la coque pendant la réaction. Le contrôle de la température grâce à l'eau contenue dans la coque, est destiné à empêcher cette température d'excéder 40°C environ au cours de la réaction. Le gradient de température créé au cours de la réaction entre la surface de la mousse et la paroi de la coque, refroidie de l'intérieur grâce à l'eau, provoque également la formation d'une peau.

Le choix de la composition de la résine de polyester et de ses composants n'est pas critique et reste à la portée de l'homme du métier. La seule condition à satisfaire est de réaliser une composition moussante apte à polymériser dans les conditions de température définies précédemment. D'une manière connue en soi, la résine polyester proprement dite peut comprendre, outre l'agent moussant et le catalyseur de polymérisation, des charges telles que le carbonate de calcium, qui servant à homogénéiser la mousse et participent également à la maîtrise de l'élévation de la température pendant la réaction de polymérisation qui est exothermique. L'agent moussant peut être à base d'isocyanate et le catalyseur à base de peroxyde. Une composition type de résine de polyester est la suivante: résine polyester: 100 parties en poids: charge (carbonate de calcium): 50 parties en poids, agent moussant (isocyanate): 7 parties en poids, catalyseur (peroxyde): 4 parties en poids.

Le taux moyen d'expansion du mélange de résine est de 3 à 4. On a obtenu de bons résultats avec un taux d'expansion égal à 3 environ. Grâce à un tel taux d'expansion, la résine en cours de moussage remplit complètement et d'une manière très intime, tout l'espace disponible entre la coque intérieure et le moule extérieur. On obtient ainsi un corps de chauffe-eau monobloc et étanche.

Sous un autre aspect, l'invention concerne un corps de chauffe-eau ne comportant aucune paroi métallique intérieure et extérieure et comprenant essentiellement une structure monobloc en polyester renforcée de fibres de verre, ladite structure étant entourée sur une de ses deux faces, d'une peau intégrée, et étant reliée sur l'autre face par l'intermédiaire d'une deuxième peau à une coque en polypropylène constituant l'intérieur du chauffe-eau.

Un tel corps de chauffe-eau procure en outre une isolation thermique améliorée. Le coefficient de conductibilité thermique à 15°C est de 0,10 à 0,13 W/mK.

Bien que le corps de chauffe-eau répondant aux caractéristiques précitées réponde parfaitement aux exigences techniques de ce genre d'appareil, il peut être souhaitable d'en améliorer encore l'isolation extérieure, en effectuant une opération classique de surmoulage avec de la mousse de polyuréthane. On peut également prévoir en addition, la mise en place d'une « chausette » en plastique rétractable, qui a pour fonction d'améliorer l'aspect général extérieur.

Dans certains cas, et pour assurer une résistance encore plus grande aux pressions internes, on peut prévoir l'introduction sur au moins une partie de l'espace de révolution séparant la coque intérieure et le moule extérieur, d'une partie métallique perforée, du genre grillage ou métal déployé, qui s'intègre parfaitement à l'intérieur de la résine expansée. L'insertion d'une telle partie métallique peut également contribuer à abaisser le prix de revient, grâce au fait que le quantité de mousse peut être diminuée en conséquence. La présence d'une telle toile métallique permet aussi de prévoir plus aisément les autres composants métalliques du chauffe-eau, par exemple ceux nécessaires à sa fixation, tels que les pattes de fixation habituelles. Enfin, ainsi qu'on l'a mentionné précédemment, la présence d'une telle partie métallique contribue à assurer une tenue encore améliorée à la pression.

D'autres avantages et caractéristiques de la présente invention ressortiront également de la description détaillée ci-après, faite en regard des dessins annexés sur lesquels:

Figure 1 est une vue en coupe de l'ensemble de moulage,

Figure 2 est une coupe du corps de chauffe-eau obtenu selon le procédé de l'invention,

Figure 3 représente le montage des tuyaux d'alimentation dans le corps de chauffe-eau de Fig. 2.

Figure 4 illustre le positionnement d'une partie métallique entre la coque et le moule.

Figure 5 est une coque schématique de la structure du corps de chauffe-eau.

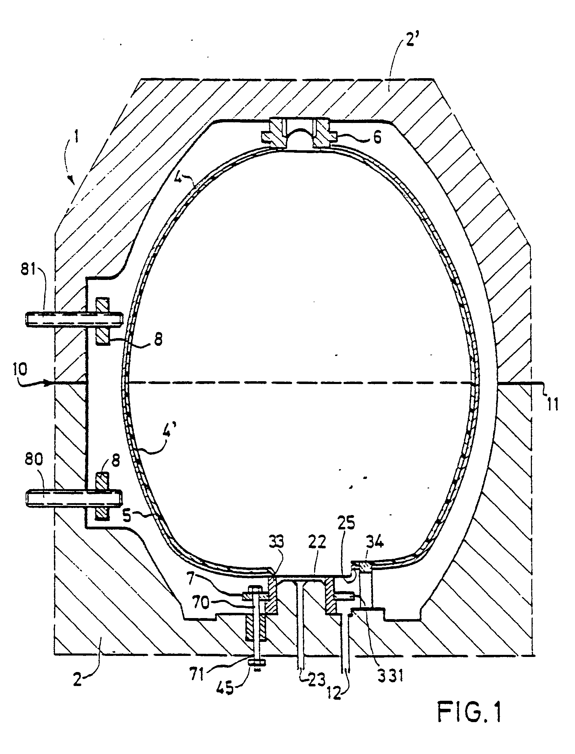

Sur la figure 1, l'ensemble de moulage pour la mise en œuvre du procédé selon la présente invention est désigné par 1. Il comprend une coque interne 4, 4' qui peut être une coque unitaire thermosoufflée en polypropylène ou une coque interne constituée de deux demi-coques thermoformées en polypropylène assemblées par soudage et/ou collage. L'ensemble 1 comprend également une première partie 2 de moule extérieur métallique et une deuxième partie 2' de moule extérieur métallique. L'extrémité inférieure de la coque 4, 4' est assujettie par une pièce de liaison 33 présentant une collerette externe 331 ainsi que par une bride 7, des vis 70 et des manchons 71 à la partie 2 de moule. La coque 4, 4' est garnie de fibres de verre préformées 5. De préférence, du côté de l'orifice 90 qui est destiné à recevoir l'appareillage électrique dans le produit final, une bride 7 solidaire de la coque 4, 4' reçoit et est traversée par quatre vis ou goujons filetés 70. Il importe que l'ancrage sur la coque 4, 4' soit suffisamment résistant à la poussée. L'extrémité correspondante de la coque 4, 4' est fixée sur la partie 2 de moule en vissant des écrous 45 sur les goujons filetés 70. On a représenté seulement un goujon 70 et un écrou 45 sur la Fig. 1 à des fins de clarté. Comme on l'a déjà indiqué, le moule extérieur est constitué de deux parties 2, 2'. Après la mise en place de la coque 4, 4' dans la partie 2 de mole, comme indiqué plus haut, la partie de la coque 4, 4' qui dépasse de ladite partie 2 de moule est à son tour revêtue de fibres de verre. On met en place la partie 2' de moule sur la partie 2 de moule au niveau du plan de joint 10, 11. Avant de réunir la partie 2 de moule à la partie 2' de moule, on fixe l'écrou 6 dans la partie 2' de moule et on referme le moule en solidarisant les deux parties 2, 2'. Après cette fermeture, la coque 4, 4' est bien maintenue en place à ses extrémités par la bride 7 et l'écrou 6. Il importe de noter que, selon la présente invention, l'ensemble bride 7, vis 70, manchons 71 et écrous 45, prévu à la partie 2 de moule, peut également être prévu sur la partie 2' de moule correspondante. Après avoir boulonné les deux parties 2, 2' de moule, on place alors la partie 2 en haut, c'est-à-dire située vers le haut. Il est prévu dans la coque 4, 4', du côté de la partie 2 de moule, deux bossages intérieurs 25 qui constitueront les passages des tubes d'eau chaude et d'eau froide. Les bossages 25 sont partiellement cylindriques et il est prévu près d'eux un plat avec un trou 12 qui servira au remplissage du mélange liquide. De préférence, le trou 12 a un diamètre de 30 à 40 mm. Il importe de remarquer que les fibres de verre 5 sont préformées de façon à faciliter leur mise en place. On peut à cet effet utiliser deux moyens. La fibre de verre peut être mise en place comme indiqué plus haut ou bien de la fibre de verre coupée est rajoutée au mélange qui sera décrit ci-après. On peut alors procéder à l'opération de coulée du mélange. Dans la partie 2 du moule, la coque 4, 4' est remplie d'eau par un orifice 23. La pièce 33 est solidaire de la coque 4, 4' et l'orifice 23 de la proéminence cylindrique 22 de la partie 2 de moule sert uniquement à l'introduction d'eau pour remplir d'eau la coque 4, 4' à la température désirée. La coque 4, 4' est remplie d'eau à une température d'environ 20°C. Il convient de s'appliquer à ne pas enfermer d'air dans la coque 4, 4'. Le plein d'eau est fait jusqu'à ras-bord. On obture l'orifice 23 avec une contre-bride et un joint non représenté. Il est également possible de prévoir une circulation d'eau à l'extérieur du moule.

A l'aide de tiges filetées 80, 81 on maintient en place à l'intérieur des deux parties 2, 2' de moule extérieur, deux inserts métalliques filetés 8. Un bouchon 34 vient obturer les deux bossages 25. On coule par l'orifice 12 ménagé dans le moule extérieur un mélange liquide qui est constitué d'une résine polyester, d'une charge, d'un agent moussant et d'un catalyseur. La résine polyester insaturée est du Sterpon® fabriquée par les Etablissements Convert Oyonnax France, il s'agit d'un polyester de diacides saturés et insaturés, et de glycol en solution dans un monomère vinylique. La charge est du carbonate de chaux, elle sert à homogénéiser la mousse et participe à maîtriser l'élévation de température pendant la réaction chimique qui est exothermique. L'agent moussant a pour qualification EMC 20. Il s'agit d'un produit à base d'isocyanate fabriqué par la société Witney. Le catalyseur a pour dénomination commerciale M50 Luperox G 2N ou Peroxymon K1 provenant de la société Monte Fluos et est constitué de peroxydes méthyléthylcétones.

Des articles et publications concernant les mousses de polyesters et faisant mention de l'état actuel de tels produits peuvent être trouvés: Dans Plastics Technology mars 1980, il est indiqué que Lasco Industries a réalisé des mousses de polyester avec un agent moussant comme additif. L'agent moussant doit être conservé à basse température et doit être conservé à basse température et doit étre bien protégé.

Dans Engineering and Processing News, juillet 1982, il est fait état d'un nouveau moulage par injection de polyesters.

Gloucester Engineering Co. Inc. 1982 décrit des distributeurs de polyester.

Un article de James Ahneuiller et al. (Modern plastics, juillet 1981) et Uniroyal Chemical Company indique que les mousses de polyesters apportent une réduction de prix de revient et améliorent les caractéristiques d'isolation. Toutefois, les auteurs indiquent que de nombreux procédés ont été utilisés pour obtenir des mousses de polyesters mais que leur commercialisation n'a pas été couronnée de succès.

Enfin Engineering Design, novembre 1980, décrit ce qu'est une mousse de polyester.

Il convient d'effectuer le mélange selon les proportions ci-après pour une partie en poids de résine polyester on utilise 0,50 partie en poids de charge, 0,07 partie en poids d'agent moussant et 0,04 partie en poids de catalyseur. Pour avoir un phénomène de bourrage, l'expansion du mélange se fait dans un rapport de 3 ou 4. On prépare le mélange de la façon suivante: à la résine polyester on ajoute, dans l'ordre ci-après, la charge de carbonate de chaux. Un produit préféré est connu sous la désignation Durcal 2 et provient de la Société Omya Paris France. Il est nécessaire de parfaitement mélanger ces deux produits (la résine polyester et la charge) afin d'éviter la formation de grumeaux qui nuieraient à la qualité de la mousse, c'est-à-dire à sa résistance mécanique. Pour ce faire, en cours de fabrication, il faut avoir en permanence une avance de ce mélange préparé 5 ou 6 heures au préalable. On introduit ensuite le catalyseur. Il faudra mélanger pendant quelques minutes, il en est de même pour l'introduction subséquente de l'agent moussant. Le mélange doit être parfait en contenir une quantité appropriée de catalyseur pour ne pas faire brûler la mousse.

Tous les composants du mélange doivent être stockés à une température supérieure ou égale à 20°C. Le mélange final doit lui aussi se trouver à une température de 20°C.

Comme on l'a indiqué plus haut, la coque interne 4, 4' est remplie d'eau à une température de 10 à 15°C environ. Le plein d'eau est effectué en principe jusqu'à ras-bord. L'eau à l'intérieur de la coque a deux effets d'une part, réguler la température et, d'autre par, contrebalancer la pression due à la poussée de la mousse au remplissage et pendant la réaction chimique. La durée de l'expansion de la mousse se situe entre 60 et 120 minutes et est, de préférence, de 90 minutes. Pendant la durée de la réaction, l'eau qui était au début à une température de 10 à 15°C est élevée à 20°C et sa température ne doit pas dépasser 40°C. Une sonde thermométrique est reliée à cet effet pour le contrôe de la température.

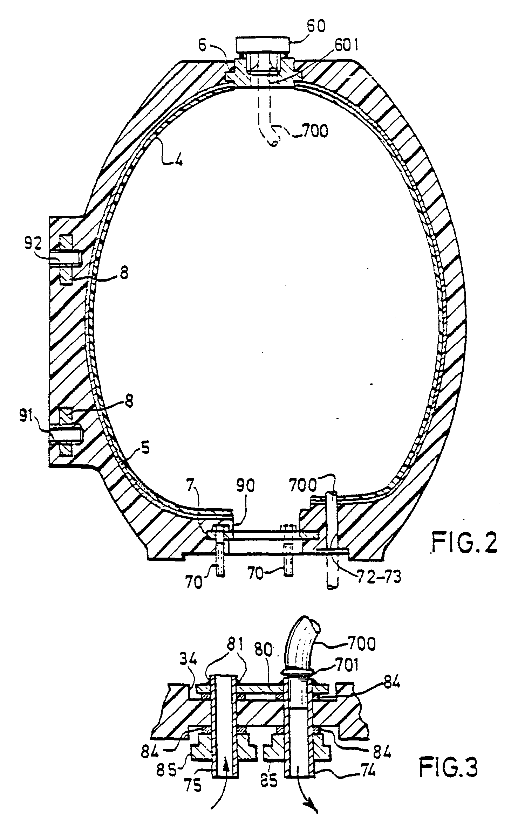

Après avoir procédé à la coulée du mélange liquide et au retrait des deux parties 2, 2' de moule extérieur, on obtient le produit illustré sur la Fig. 2. Le corps de chauffe-eau comporte des organes de fixation 91, 92 ancrés dans les inserts 8. Un bouchon 60 est appliqué sur l'écrou 6. Un tuyau 700 est introduit et ce tuyau 700 est maintenu en place par des ailettes 601 prévues dans le bouchon 60. A l'autre extrémité, les vis 70 après retrait des manchons 71 permettent de fixer une résistance chauffante. Les deux trous 72 et 73 obtenus sur le bossage 25 permettent la mise en place des tuyaux d'alimentation en eau chaude et en eau froide.

A cet effet, comme montré sur la Fig. 3, les deux tubes 74 et 75 préalablement fixés sur une plaque 80 par exemple, au moyen de soudures 81 sont introduits en passant par l'orifice 90 dans les tous 72 et 73. Les tuyaux 74, 75 sont ainsi empêchês de tourner au moment de leur fixation sur le corps de chauffe-eau à l'aide des joints 84 et des écrous 85. On comprend aisément que le tuyau 700 destiné à collecter l'eau chaude est introduit depuis le sommet jusqu'à la sortie 74. Le bourrelet 701 permet une bonne mise en place. La résistance chauffante est fixée par les vis 70. La coque 4, 4' doit satisfaire à plusieurs critères. Elle doit répondre aux exigences de qualité alimentaire et aux critères de températures. En effet, elle doit tenir à une température de fonctionnement quasi-permanente de 80°C environ et à une température exceptionnelle supérieure à 100°C. Le polypropylène satisfait aux exigences ci-dessus.

Après l'obtention du corps de chauffe-eau selon le procédé ci-dessus décrit, on peut opérer si désiré une opération classique de moulage extérieur avec par exemple, de la mousse de polyuréthane. Une chaussette en plastique rétractable pourra recouvrir le tout et donne ainsi un aspect agréable.

Habituellement la température doit être entre 10 et 15°C avant la coulée du mélange et on imprime à l'ensemble un mouvement de rotation pendant trois à quatre minutes pour mouiller toutes les surfaces. La température de l'eau est ensuite ramenée à 20°C environ. La formation d'une peau, de part et d'autre de la mousse, donne une résistance mécanique supplémentaire par effet sandwich.

Pour améliorer le prix de revient, on prévoit dans une variante de mise en œuvre de la pré-

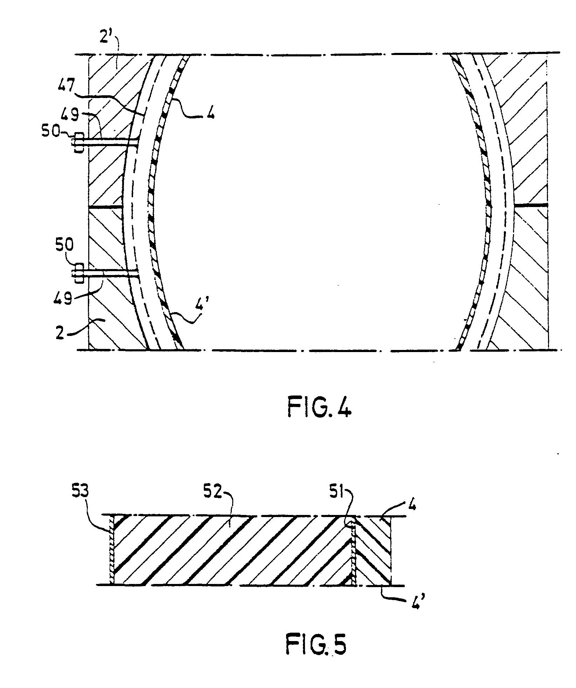

sente invention comme illustré sur la fig. 4, l'interposition d'une partie métallique perforée 47 dans l'espace 48 situé entre la coquille 4, 4′ et les parties 2, 2′ de moule extérieur. Cette partie métallique perforée 47 est fixée par des tiges 49 et des écrous borgnes 50. Cette partie métallique perforée 47 est en principe située à mi-chemin entre la coque 4, 4′ et les parties 2, 2′ de moule métallique.

L'épaisseur, la texture seront choisies à volonté selon l'exigence finale du produit désire.

La figure 5 montre une coupe schématique du produit final, sur cette figure la coque est désignée par 4, 4′, la peau située près de la coque 4, 4′ est désignée par 51, 52 est le mélange en polyester et en fibres de verre, et 53 représente l'autre peau la plus éloignée de la coque 4, 4′.

Il importe d'observer que, selon la présente invention, on obtient un mélange de polyester et de fibrs de verre et que les fibres de verre se répartissent dans tout le volume de mousse polyester. Les deux peux 51 et 53 représentent une partie très mince de quelques dixièmes de millimètre et contribuent à procurer une amélioration de la résistance mécanique du produit final.

## Revendications

1. Procédé d'obtention d'un corps de chauffe-eau en matière plastique résistant à la pression, ne comportant pas de paroi métallique ni à l'extérieur, ni à l'intérieur, dans lequel

A) on utilise une coque en matière plastique de préférence en polypropylène, destinée à constituer l'intérieur du chauffe-eau et servant également de paroi intérieure de moulage, ladite coque comportant au moins un orifice,

B) on met en place ladite coque à l'intérieur d'un moule en deux parties en ménageant un espace entre la partie extérieure de la coque et l'intérieur du moule, la coque et l'une des parties au moins du moule possédant des moyens coopérants de centrage et de maintien de la coque à l'intérieur du moule, le moule présentant une ouverture,

C) on introduit de l'eau dans la coque intérieure par ledit orifice,

D) on coule par ladite ouverture du moule un mélange liquide consistant essentiellement en une composition de résine polyester rénforcée de fibres, capable de mousser et de polymériser, en refroidissant l'extérieur du moule à une température d'environ 10 à 15°C au moment de la coulée de la résine, afin d'obtenir un effet de peau à la surface de contact de la mousse avec le moule lors de la polymérisation de celle-ci, en contrôlant la température de la résine en cours d'expansion et de polymérisation de manière qu'elle ne dépasse pas 40°C environ, après quoi on retire les deux parties du moule.

2. Procédé selon la revendication 1, caractérisé en ce qu'un renforcement de la résine de polyester à l'aide de fibres est réalisé en revêtant de fibres la coque sur la surface extérieure de celle-ci.

3. Procédé selon l'une des revendications 1 ou 2, caractérisé en ce qu'un renforcement de la résine de polyester à l'aide de fibres est réalisé en tapissant de fibres l'une et/ou l'autre des deux parties du moule sur la surface intérieure de celui-ci.

4. Procédé selon la revendication 1, caractérisé en ce que pour un renforcement de la résine de polyester à l'aide de fibres, on utilise des fibres coupées qui sont introduites dans le mélange à base de résine et coulées avec celui-ci à l'intérieur du moule.

5. Procédé selon l'une quelconque des revendications 1 à 4, caractérisé en ce que le matériau constitutif de la coque est du polypropylène.

6. Procédé selon l'une quelconque des revendications 1 à 5, caractérisé en ce que la coque est composée de deux demi-coques réalisées par thermoformage et assemblées par soudage ou collage.

7. Procédé selon l'une quelconque des revendications 1 à 5, caractérisé en ce que la coque est réalisée d'un seul tenant par thermosoufflage.

8. Procédé selon l'une quelconque des revendications 1 à 7, caractérisé en ce que l'orifice de la coque est centré sur l'axe de symétrie de celle-ci.

9. Procédé selon l'une quelconque des revendications 1 à 8, caractérisé en ce que la coque présente des moyens destinés à coopérer avec des moyens correspondants du moule, en vue du centrage et du maintien de la coque à l'intérieur du moule.

10. Procédé selon la revendication 9, caractérisé en ce que la coque présente une protubérance située en vis-à-vis de l'orifice et sur l'axe de symétrie de la coque à l'autre extrémité de celle-ci.

11. Procédé selon l'une quelconque des revendications 1 à 10, caractérisé en ce qu'on contrôle la température de la résine de polyester en cours de polymérisation et d'expansion, d'une part de l'extérieur en refroidissant l'extérieur du moule au moment de la coulée de la résine, à une température de l'ordre de 10 à 15°C, et d'autre part de l'intérieur, grâce au fait que la coque a été remplie préalablement à la coulée de la résine, d'eau ou fluide caloporteur équivalent.

12. Procédé selon la revendication 11, caractérisé en ce qu'on assure une circulation d'eau à l'intérieur de la coque pendant la durée de la polymérisation.

13. Procédé selon l'une quelconque des revendications 1 à 12, caractérisé en ce que la résine polyester comprend essentiellement un agent moussant et un catalyseur de polymérisation, ainsi que des charges telles que du carbonate de calcium.

14. Procédé selon la revendication 13, caractérisé en ce que la résine de polyester possède approximativement la composition suivante:

résine polyester: 100 parties en poids, charge (carbonate de calcium): 50 parties en poids, agent moussant (isocyanate): 7 parties en poids, catalyseur (peroxyde): 4 parties en poids.

15. Procédé selon la revendication 14, caractérisé en ce que le taux moyen d'expansion de la résine en ce que le taux moyen d'expansion de la résine de polyester est de 3 à 4.

16. Procédé selon l'une quelconque des revendications 1 à 15, caractérisé en ce qu'on améliore l'isolation extérieure du corps de chauffe-eau en réalisant un surmoulage avec de la mousse de polyuréthane.

17. Procédé selon l'une quelconque des revendications 1 à 16, caractérisé en ce que, avant le coulage de la résine de polyester, on introduit sur au moins une partie de l'espace de révolution séparant la coque intérieure et le moule extérieur une partie métallique perforée s'intégrant à la résine après polymérisation de celle-ci.

18. Corps de chauffe-eau obtenu par le procédé selon l'une quelconque des revendications 1 à 17, ne comportant aucune paroi métallique intérieure et extérieure et comprenant essentiellement une structure monobloc en polyester renforcé de fibres de verre, ladite structure étant entourée sur une de ses deux faces d'une peau intégrée en étant solidaire sur l'autre face d'une coque en polypropylène constituant l'intérieur du chauffe-eau.

19. Corps de chauffe-eau obtenu par le procédé selon l'une quelconque des revendications 1 à 17, ne comportant aucune paroi métallique intérieure et extérieure et comprenant essentiellement une structure monobloc en polyester expansé renforcée fibres de verre, ladite résine de polyester étant solidaire d'une coque en polypropylène constituant l'intérieur du chauffe-eau, le coefficient de conductibilité thermique à 15°C dudit chauffe-eau étant de 0,10 à 0,13 W/mK.

**Patentansprüche**

1. Verfahren zur Herstellung eines Körpers für einen druckfesten, aus Kunststoff bestehenden Warmwasserbereiter, der weber aussen noch innen eine Metallwand aufweist, bei dem man

(A) eine Schale aus Kunststoff, vorzugsweise Polypropylen, verwendet, die das Innere des Warmwasserbereiters darstellen soll und gleichzeitig als innere Formwand dient, wobei die Schale mindestens eine Öffnung aufweist,

(B) die Schale im Inneren einer zweiteiligen Form positioniert, indem man einen Zwischenraum zwischen dem äusseren Teil der Schale und dem Inneren der Form ausspart, wobei die Schale und mindestens einer der Teile der Form zusammenwirkende Mittel aufweisen, welche die Schale im Inneren der Form zentrieren und halten, und wobei die Form eine Arbeitsöffnung aufweist,

(C) in die Innenschale durch die Öffnung Wasser einleitet,

(D) durch die Arbeitsöffnung de Form eine flüssige Mischung eingiesst, die im wesentlichen aus einer fiberverstärkten schäumbaren und polymerisierbaren Polyesterharz-Zusammensetzung besteht, das Äussere der Form auf eine Temperatur von etwa 10 bis 15°C während des Eingiessens des Härzes kühlt, um einen Hauteffekt an der Kontaktoberfläche des Schaums mit der Form während seiner Polymerisation zu erzielen, wobei man die Temperatur des Harzes während seiner Expansion und Polymerisation so regelt, daß sie ungefähr 40°C nicht überschreitet, worauf man die beiden Teile der Form zurückzieht.

2. Verfahren nach Anspruch 1, dadurch gekennzeichnet, dass man eine Verstärkung des Polyesterharzes mit Hilfe von Fasern durchführt, indem man die Aussenfläche der Schale mit Fasern belegt.

3. Verfahren nach Anspruch 1 oder 2, dadurch gekennzeichnet, dass man eine Verstärkung des Polyesterharzes mit Hilfe von Fasern durchführt, indem man den einen und/oder den anderen der beiden Teile der Form auf der Innenoberfläche mit Fasern auskleidet.

4. Verfahren nach Anspruch 1, dadurch gekennzeichnet, dass man eine Verstärkung des Polyesterharzes mit Hilfe von Fasern durchführt, indem man geschnittene Fasern verwendet, welche in die Harzmischung eingebracht und mit dieser in das Innere der Form eingegossen werden.

5. Verfahren nach irgendeinem der Ansprüche 1 bis 4, dadurch gekennzeichnet, dass die Schale aus Polypropylen besteht.

6. Verfahren nach irgendeinem der Ansprüche 1 bis 5, dadurch gekennzeichnet, dass die Schale aus zwei warmgeformten Halbschalen besteht, die durch Schweissen oder Kleben miteinander verbunden sind.

7. Verfahren nach irgendeinem der Ansprüche 1 bis 5, dadurch gekennzeichnet, dass die Schale in einem Stück durch Blasformen hergestellt wird.

8. Verfahren nach irgendeinem der Ansprüche 1 bis 7, dadurch gekennzeichnet, dass die Öffnung in der Schale auf deren Symmetrieachse zentriert ist.

9. Verfahren nach irgendeinem der Ansprüche 1 bis 8, dadurch gekennzeichnet, dass die Schale Mittel aufweist, die mit entsprechenden Mitteln der Form zusammenwirken, um die Schale im Inneren der Form zu zentrieren und zu halten.

10. Verfahren nach Anspruch 9, dadurch gekennzeichnet, dass die Schale einen Vorsprung aufweist, welcher gegenüber der Öffnung und auf der Symmetrieachse der Schale an derem anderen Ende angeordnet ist.

11. Verfahren nach irgendeinem der Ansprüche 1 bis 10, dadurch gekennzeichnet, dass man die Temperatur des Polyesterharzes während dem Polymerisieren und Schäumen regelt, und zwar zum Teil von aussen durch Kühlen des Äusseren der Form während des Eingiessens des Harzes auf eine Temperatur in der Grössenordnung von 10 bis 15°C und zum anderen Teil von innen aufgrund der Tatsache, dass die Schale vor dem Eingiessen des Harzes mit Wasser oder einem äquivalenten wärmeabführenden Fluid gefüllt worden ist.

12. Verfahren nach Anspruch 11, dadurch gekennzeichnet, dass man eine Zirkulation des Wassers im Inneren der Schale während der Dauer der Polymerisation aufrechterhält.

13. Verfahren nach irgendeinem der Ansprüche 1 bis 12, dadurch gekennzeichnet, dass das Polyesterharz ein Schäummittel und einen Polymerisationskatalysator sowie Zuschläge, wie Calciumcarbonat, enthält.

14. Verfahren nach Anspruch 13, dadurch gekennzeichnet, dass das Polyesterharz ungefähr die folgende Zusammensetzung hat:

Polyesterharz: 100 Gewichtsteile, Zuschlag (Calciumcarbonat): 50 Gewichtsteile, Schäummittel (Isocyanat): 7 Gewichtsteile, Katalysator (Peroxid): 4 Gewichtsteile.

15. Verfahren nach Anspruch 14, dadurch gekennzeichnet, dass der mittlere Expansionsgrad des Polyesterharzes 3 bis 4 beträgt.

16. Verfahren nach irgendeinem der Ansprüche 1 bis 15, dadurch gekennzeichnet, dass man die Aussenisolation des Warmwasserbereiter-Körpers verbessert, indem man ein Überformen mit Polyurethanschaum durchführt.

17. Verfahren nach irgendeinem der Ansprüche 1 bis 16, dadurch gekennzeichnet, dass man vor dem Eingiessen des Polyesterharzes in mindestens einen Teil des Umfangsraums, der die innere Schale und die äussere Form trennt, ein perforiertes Metallteil einbringt, das nach der Polymerisation in das Harz integriert ist.

18. Körper für einen Warmwasserbereiter, erhalten nach dem Verfahren irgendeines der Ansprüche 1 bis 17, welcher keine innere und äussere Metallwand aufweist und im wesentlichen eine einstückige Struktur aus Glasfaser-verstärktem Polyester umfasst, wobei die Struktur auf einer ihrer beiden Seiten mit einer integrierten Haut umgeben ist und auf der anderen Seite formschlüssig mit einer Polypropylenschale verbunden ist, welche das Innere des Warmwasserbereiters darstellt.

19. Körper für einen Warmwasserbereiter, erhalten nach dem Verfahren irgendeines der Ansprüche 1 bis 17, der keine innere und äussere Metallwand aufweist und im wesentlichen eine einstückige Struktur aus geschäumtem, Glasfaser-verstärktem Polyester umfasst, wobei das Polyesterharz formschlüssig mit einer Polypropylenschale verbunden ist, welche das Innere des Warmewasserbereiters darstellt, wobei der Wärmeleitfähigkeitskoeffizient des Warmwasserbereiters bei 15°C 0.10 bis 0.13 W/mIK beträgt.

**Claims**

1. Method for obtaining a pressure resisting plastic water-heater body which has no metallic walls, either on the outside or on the inside, wherein

A) a shell made of plastic, preferably polypropylene, is used, which is intended to form the interior of the water heater and also serves as an internal molding wall, the said shell comprising at least one orifice,

B) the said shell is placed inside a mold consisting of two parts, while providing a space between the outside of the shell and the inside of the mold, the shell and at leat one of the parts of the mold possessing cooperating means for centering and holding the shell inside the mold, the mold having an opening,

C) water is introduced into the internal shell via the said orifice,

D) a liquid mixture consisting essentially of a fiber reinforced polyester resin composition capable of foaming and polymerizing is cast via the said opening of the mold, by cooling the outside of the mold to a temperature of approximately 10 to 15°C during casting of the resin, so as to obtain a skin effect on the surface of the foam which comes into contact with the mold during polymerization of the said foam, by controlling the temperature of the expanding and polymerizing resin so that it does not exceed approximately 40°C, after which the two parts of the mold are removed.

2. Method as claimed in claim 1, wherein a reinforcement of the polyester resin with fibers is performed by coating the external surface of the shell with fibers.

3. Method as claimed in one of claims 1 or 2, wherein a reinforcement of the polyester resin with fibers is performed by lining either or both of the two parts of he mold with fibers, on the internal surface of the latter.

4. Method as claimed in claim 1, wherein cut fibers are used for reinforcing the polyester resin with fibers are introduced into the resin-based mixture and cast with the latter inside the mold.

5. Method as claimed in any one of claims 1 to 4, wherein the material forming the shell is polypropylene.

6. Method as claimed in any one of claims 1 to 5, wherein the shell consists of two half-shells made by means of thermoforming and assembled by welding or bonding.

7. Method as claimed in any one of claims 1 to 5, wherein the shell is made as a single piece by means of blow molding.

8. Method as claimed in any one of claims 1 to 7, wherein the orifice of the shell is centered on the axis of symmetry of the latter.

9. Method as claimed in any one of claims 1 to 8, wherein the shell has means intended to cooperate with corresponding means of the mold, with a view to centering and holding the shell inside the mold.

10. Method as claimed in claim 9, wherein the shell has a protuberance located opposite the orifice and on the axis of symmetry of the shell at the other end of the latter.

11. Method as claimed in any one of claims 1 to 10, wherein the temperature of the polymerizing and expanding polyester resin is controlled, on the one hand, from the outside by cooling the outside of the mold during casting of the resin to a temperature of the order of 10 to 15°C and, on the other hand, from the inside, owing to the fact what the shell has been filled, before casting of the resin, with water or an equivalent heat-transfer fluid.

12. Method as claimed in claim 11, wherein water is circulated inside the shell for the duration of polymerization.

13. Method as claimed in any one of claims 1 to 12, wherein the polyester resin comprises essentially a foaming agent and a polymerization catalyst, as well as fillers such as calcium carbonate.

14. Method as claimed in claim 13, wherein the polyester resin has approximately the following composition:

polyester resin: 100 parts by weight, filler (calcium carbonate): 50 parts by weight, foaming agent (isocyanate): 7 parts by weight, catalyst (peroxide): 4 parts by weight.

15. Method as claimed in claim 14, wherein the average expansion factor of the polyester resin is 3 to 4.

16. Method as claimed in any one of claims 1 to 15, wherein the external insulation of the water-heater body is improved by performing duplicate molding using polyurethane foam.

17. Method as claimed in any one of claims 1 to 16, wherein before casting the polyester resin, a perforated metallic part is inserted in at least part of the space of revolution separating the internal shell and the external mold, which metallic part is incorporated in the resin after polymerization of the latter.

18. Water-heater body obtained by the method as claimed in any one of claims 1 to 17 which has no internal and external metallic walls and consists essentially of a single-piece structure made of glass-fiber reinforced polyester, the said structure being surrounded, on one of its two surfaces, with an integrated skin and being integral, on the other surface, with a polypropylene shell forming the interior of the water heater.

19. Water-heater body obtained by the method as claimed in any one of claims 1 to 17 which has no internal and external metallic walls and which consists essentially of a single-piece structure made of expanded polyester reinforced with glass fibers, the said polyester resin being integral with a polypropylene shell forming the interior of the water heater, the coefficient of thermal conduction of the said water heater at 15°C being from 0.10 to 0.13 W/mK.

FIG.1

FIG.2

FIG.3

FIG. 4

FIG. 5